# EUROPÄISCHE PATENTANMELDUNG

(11) **EP 3 878 660 A1**
(43) Veröffentlichungstag der Anmeldung: **15.09.2021**
(21) Anmeldenummer: 21160508.4
(22) Anmeldetag: 03.03.2021
(51) Int. Cl.: B42D 25/24, B42D 25/305, B42D 25/36, B42D 25/41, D21H 21/48, G06K 19/07, B42D 25/455, B42D 25/46

(54) **SICHERHEITS- ODER WERTDOKUMENT MIT EINEM ELEKTRONISCHEN ELEMENT**

(30) Priorität: 13.03.2020 DE 102020106954
(71) Anmelder: Bundesdruckerei GmbH, 10969 Berlin (DE)
(72) Erfinder: Yalcinkaya, Erkan, 12353 Berlin (DE); Andres, Walter, 13507 Berlin (DE); Knebel, Michael, 13086 Berlin (DE)
(74) Vertreter: Mammel und Maser

(57) **Zusammenfassung**

Die Erfindung betrifft ein Sicherheits- oder Wertdokument (11, 20), das ein elektronisches Element (24) zur Datenspeicherung aufweist, wobei zur Anzeige von Manipulationsversuchen durch große Impulse und/oder hohe Temperaturen an dem elektronischen Element (24) in dem an das elektronische Element (24) angrenzenden Bereich (36, 40), insbesondere in dem Bereich der Crack-Prävention (40), Indikatormittel (42) in Kapseln (41) vorgesehen sind und die Kapseln (41) durch Einwirkung eines großen Impulses und/oder einer hohen Temperatur zerstörbar sind. (Hierzu Figur 4)

Die Erfindung betrifft auch die Verwendung eines Sicherheits- oder Wertdokuments (11, 20) zur Erkennung von Manipulationen.

## Beschreibung

Die Erfindung betrifft Sicherheits- oder Wertdokumente, die elektronische Elemente zur Speicherung von Daten enthalten und einen Indikator zur Anzeige von Manipulationsversuchen.

Um betrügerische Manipulationen an den Sicherheits- oder Wertdokumenten zu erschweren und die Benutzung manipulierter Dokumente durch unbefugte Dritte zu vermeiden, werden die Sicherheitsdokumente mit strukturellen Sicherheitsmerkmalen wie Hologrammen oder substanziellen Merkmalen wie thermochromen Pigmenten oder mit versteckten Merkmalen ausgerüstet.

Sicherheitselemente mit einer thermochromen Farbschicht, die eine erste Information überdeckt, so dass die erste Information nicht erkennbar ist und erst nach einem Wärmeeintrag in die thermochrome Farbschicht erkennbar wird, sind im Stand der Technik bekannt.

Die AT 362 658 lehrt ein Sicherheitspapier, ein Verfahren zur Prüfung des Sicherheitspapiers und eine Vorrichtung zur Durchführung des Prüfverfahrens, wobei das Sicherheitspapier beispielsweise ein Wertpapier, eine Banknote oder dergleichen sein kann. Innerhalb des fälschungssicheren Papiers ist ein thermochromer Pigmentfarbstoff eingebracht, welcher bevorzugt aufgedruckt oder innerhalb der Papiermasse verteilt vorgesehen ist. Beim Überschreiten einer vorbestimmten Temperatur wird die Farbe dieser thermochromen Pigmentfarbstoffe dann reversibel geändert. Dies geschieht dadurch, dass dem Pigmentfarbstoff ein durch elektromagnetische Schwingungen von mindestens 10 kHz erwärmbarer, vorzugsweise elektrisch leitender Stoff, beigemengt ist, der bei elektromagnetischer Anregung Wärme entwickelt, wobei durch diese Wärme der thermochrome Pigmentfarbstoff reversibel die Farbe ändert. Bei der Prüfung auf Echtheit wird das Sicherheitspapier mit der Strahlung angeregt, und ein echtes Sicherheitspapier zeigt dann den erwarteten Farb-umschlag.

Die EP 1 320 846 A2 beschreibt ein Sicherheitselement mit thermochromen Farbstoffen, bei dem zusätzlich ein LCR-Schwingkreis vorgesehen ist. Der LCR-Schwingkreis dient dazu, bei Anregung durch elektromagnetische Strahlung Wärme in dem Sicherheitselement zu produzieren, die dann zu einer Farbänderung in der thermochromen Farbschicht führt.

Zu den versteckten Sicherheitsmerkmalen zählt auch die Speicherung von Informationen auf einem elektronischen Element wie einem IC-Chip oder ein Transpondermodul aus einem IC-Chip mit Antenne, das in das Sicherheitsdokument integriert ist. Häufig enthalten die auf dem elektronischen Element gespeicherten Informationen biometrische Daten, die mit den in den anderen Sicherheitsmerkmalen des Sicherheitsdokuments hinterlegten Informationen korrespondieren.

Häufig werden die elektronischen Elemente in Kunststoffschichten einlaminiert. Um zu verhindern, dass die in die harten Kunststoffschichten einlaminierten elektronischen Elemente nebst Kontakten und Antenne durch Biegen der harten Kunststoffschichten oder unbeabsichtigte Stöße zerstört werden, ist häufig in dem das elektronische Element umgebenden Bereich eine sogenannte "Crack-Prävention" vorgesehen, die eine unbeabsichtigte Krafteinwirkung auf das elektronische Element, dessen Antenne und die Kontakte und die dadurch bewirkte Schädigung verhindern soll.

Im Allgemeinen wird für solche Crack-Präventionen ein Kunststoff eingesetzt, der weicher als das Material der harten Kunststoffschichten ist. Das weichere Kunststoffmaterial der Crack-Prävention umgibt das elektronische Element, die Kontakte und Antenne wenigstens teilweise und kann somit unbeabsichtigte Stöße dämpfen.

Sofern die in einem (sichtbaren) Sicherheitsmerkmal hinterlegte Information manipuliert sein sollte, wird die Manipulation erkennbar, wenn die manipulierte Information nicht mehr mit der auslesbaren, in dem elektronischen Element hinterlegten Information übereinstimmt.

Die Fälscher versuchen deshalb, einen Abgleich der auf dem (manipulierten) Sicherheitsmerkmal hinterlegten manipulierten Information mit der auf dem elektronischen Element hinterlegten (korrekten) Information dadurch zu vermeiden, dass sie die auf dem elektronischen Element hinterlegte Information löschen oder das Element oder Teile desselben zerstören, so dass keine Information mehr ausgelesen werden kann. Um die auf dem elektronischen Element gespeicherten Daten unauslesbar zu machen, wird beispielsweise versucht, das elektronische Element durch einen großen Impuls bzw. Druck bzw. Krafteinwirkung, beispielsweise durch Schlag mit einem Hammer, oder hohe Temperaturen zu zerstören.

Allerdings können sich die Informationen aus den in den Sicherheitsdokumenten vorgesehenen elektronischen Speicherelementen auch aus anderen Gründen nicht auslesen lassen, beispielsweise, weil sie versehentlich unsachgemäß behandelt wurden, unbeabsichtigt zu hohen Temperaturen oder Feuchtigkeit ausgesetzt oder gebogen wurden.

Wird im Rahmen einer Überprüfung des Sicherheitsdokuments festgestellt, dass sich die auf dem elektronischen Element gespeicherte Information nicht auslesen lässt, wäre es wünschenswert, feststellen zu können, ob dies auf einen Manipulationsversuch zurückzuführen ist (der zudem strafbar ist) oder ob ein "normaler" Defekt des Elements vorliegt.

In manchen Ländern wie den USA wird bei einem nicht intakten elektronischen Element in einem Sicherheitsdokument gar die Einreise verweigert.

Aus der DE 10 2017 111 639 A1 ist ein Sicherheits- oder Wertdokument mit einem elektronischen Element zur Datenspeicherung und einem Indikatormittel, insbesondere Graphit, das in eine Kapsel bzw. Karte integriert sein kann, bekannt. Wird das Sicherheits- oder Wertdokument mit Mikrowellen bestrahlt, werden die Kapseln/die Karte zuvor oder gleichzeitig mit der Zerstörung der integrierten Schaltung sichtbar beschädigt. Hierdurch kann ein Manipulationsversuch an dem Sicherheitsund Wertdokument durch Mikrowellenbestrahlung angezeigt werden.

Die DE 602 21 755 T2 lehrt ein Verfahren, um Dokumente wie Banknoten in einer Notfallsituation zu markieren. Hierzu weisen die Dokumente ein aktives Element wie beispielsweise Graphit auf, das mit elektromagnetischer Mikrowellenstrahlung verändert werden kann.

Die DE 696 08 827 T2 betrifft ein druckbares Dokument enthaltend Mittel zur Aufdeckung von Fälschungen.

Die DE 198 32 003 A1 betrifft ein mehrschichtiges Blattmaterial mit Sicherheitszeichen mit einem flächenförmigen Trägermaterial und einer wärmeempfindlichen Schicht und mindestens einer druckempfindlichen Schicht, die bei einer Druckeinwirkung sichtbare Markierungen ausbildet.

Hiervon ausgehend liegt der Erfindung die Aufgabe zugrunde, Manipulationsversuche an den elektronischen Elementen zur Speicherung von Informationen der Sicherheitsdokumente erkennbar zu machen und in Bezug auf solche Manipulationsversuche verbesserte Sicherheitsdokumente bereitzustellen.

Diese Aufgabe wird durch ein Sicherheits- oder Wertdokument, das ein elektronisches Element zur Datenspeicherung aufweist, gelöst, wobei zur Anzeige von Manipulationsversuchen durch große Impulse und/oder hohe Temperaturen an dem elektronischen Element in dem an das elektronische Element angrenzenden Bereich, insbesondere in dem Bereich der Crack-Prävention, verkapselte Indikatormittel vorgesehen sind und die Kapseln durch Einwirkung eines großen Impulses und/oder einer hohen Temperatur zerstörbar sind.

Versucht ein Fälscher gezielt, das elektronische Element in dem Sicherheits- oder Wertdokument durch Einwirkung eines großen Impulses, beispielsweise durch Schlag mit einem Hammer, oder hohe Temperatur zu zerstören, so analysiert er zunächst die genaue Lage des elektronischen Elements in dem Sicherheitsdokument, beispielsweise, indem er das Sicherheits- oder Wertdokument gegen das Licht hält. Hat er die genaue Lage des elektronischen Elements ermittelt, erfolgt dann der gezielte Versuch, das elektronische Element durch einen Schlag oder Einwirkung von hohen Temperaturen zu zerstören oder "unauslesbar" zu machen.

Der gezielte Manipulations- und Zerstörungsversuch unterscheidet sich von einer zufälligen Zerstörung dadurch, dass gezielt auf den Ort des elektronischen Elements mit einem großen Impuls oder hohen Temperaturen eingewirkt wird.

Aus diesem Grund ist erfindungsgemäß vorgesehen, in dem an das elektronische Element angrenzenden Bereich, insbesondere der Crack-Prävention, Kapseln mit dem Indikatormittel vorzusehen, die bei Einwirkung eines großen Impulses oder hohen Temperaturen auf das elektronische Element zerbersten und so den Manipulationsversuch an dem elektronischen Element anzeigen.

Das in den Kapseln befindliche Indikatormittel ist vorzugsweise ein Farbstoff oder ein Edukt E1 zur Herstellung eines Farbstoffs F12.

In einer ersten bevorzugten Variante umfasst das Indikatormittel einen Farbstoff. Grundsätzlich kann ein jeder Farbstoff in dem Indikatormittel eingesetzt werden. Die verkapselten Farbstoffe sollten gegenüber weiteren Manipulationsversuchen wie z.B. UV-Strahlung stabil sein, damit die den Manipulationsversuch anzeigende Färbung vom Fälscher nicht wieder beseitigt werden kann.

Der Farbstoff kann als Feststoff oder, bevorzugt, gelöst oder aufgeschlämmt in einem Lösemittel, insbesondere Wasser oder einem organischen Lösemittel, vorliegen. Die Verwendung von Farbstoffen in Lösung oder Suspensionen hat den Vorteil, dass sich die Flüssigkeit mit dem Farbstoff nach dem Zerplatzen der Kapsel in die Umgebung ergießt und somit verteilt und besser erkannt werden kann.

Grundsätzlich kann das Zerplatzen der Kapseln, ggf. mit einer chemischen Reaktion, auch zu einer Volumenzunahme führen, die ebenfalls als Manipulationsversuch detektiert werden kann.

Wird versucht, das elektronische Element mit einem Hammer zu zerstören, so werden durch den Schlag auch Kapseln mit dem Farbstoff, die sich in der Nähe des elektronischen Elements befinden, zerstört und der Farbstoff tritt aus und bildet einen unschönen Fleck, der den Manipulationsversuch anzeigt.

Das Material der Crack-Prävention ist so weich, dass leichte unbeabsichtigte Stöße auf das elektronische Element nebst seiner Antenne oder den Kontakten verhindert werden, jedoch nicht so weich, dass es den gezielten starken Schlag, beispielsweise mit einem Hammer, auf die Kapseln hinreichend abfedern und somit ein Zerbersten der Kapseln verhindern könnte.

Das Material der Crack-Prävention ist vorzugsweise ein weicher thermoplastischer Kunststoff, der weicher als das Material der Kunststoffschichten ist, in dem die Kapseln mit dem Indikator eingebettet sind. Vorzugsweise ist das Material der Crack-Prävention aus TPU, einem klebenden Polymer oder Polyacrylaten.

Im Allgemeinen ist der Bereich der Crack-Prävention zwischen 30 Mikrometer und 400 Mikrometer höher als die Höhe des elektronischen Elements und zwischen 0 mm und 15 mm, insbesondere bis zum 10 mm oder bis zu 5 mm und steht auf jeder Seite über den Rand des elektronischen Elements hinaus.

Dadurch, dass vorzugsweise in dem Crack-Präventionsbereich die Indikatormittel in Kapseln vorgesehen sind, wird in dem Crack-Präventionsbereich, der eine Beschädigung des elektronischen Bauteils verhindern soll, ein zusätzlicher Indikator für das Einwirken von Stößen und Schlägen vorgesehen.

In einer bevorzugten Variante ist der Farbstoff ein thermochromer Farbstoff, der unter Einwirkung von höheren Temperaturen seine Farbe vorzugsweise irreversibel ändert. Bei der Einwirkung von höheren Temperaturen in der Umgebung des elektronischen Elements erwärmt sich das elektronische Element, die Kontakte und die Antenne, da sie elektrisch und damit auch Wärmeleiter sind, weitaus stärker als die umgebenden Kunststoffschichten. Dadurch wirkt das elektronische Element und die Antenne wie eine Wärmequelle in dem Sicherheits- oder Wertdokument, das dann, wenn der Indikatorfarbstoff ein thermochromer Farbstoff ist, aufgrund der Erwärmung um das elektronische Element einen Farbumschlag bewirkt oder seine "Farbe" von einem nicht oder wenig farbigen "Farbstoff" in einen deutlich gefärbten, ggf. anders farbigen Farbstoff ändert.

Die Kapseln können beispielsweise infolge der starken Temperaturerhöhung, beispielsweise, weil sich Lösemittel in den Kapseln erwärmt und diese aufgrund des größeren Volumens oder des Verdampfens des Lösemittels sprengt, oder weil das Kapselmaterial hohen Temperaturen nicht standhält, zerplatzen. Ist die Kapsel zerplatz, so kann sich der Farbstoff, sofern es sich um eine Lösung oder Flüssigkeit handelt, in die Umgebung ergießen.

Wenn der thermochrome Farbstoff vor dem Schlag oder der Erwärmung nicht oder wenig farbig ist oder in der Kapsel ein farbloses oder farbschwaches Edukt zur Herstellung eines Farbstoffs enthalten ist, so ist das vorhandene Indikatormittel in der Kapsel für den Fälscher nicht oder nur schwer zu erkennen. Erfolgt nun durch Temperaturerhöhung ein (irreversibler) Farbumschlag des thermochromen Farbstoffs oder reagiert das aus der Kapsel freigesetzte Edukt mit weiteren vorhandenen Reaktionspartnern zu einem Farbstoff, so wird die Manipulation in der Umgebung des elektronischen Elements durch Farbänderung und ggf. einen Farbfleck angezeigt.

Der Farbstoff kann flüssig, fest oder als Lösung in der Kapsel vorliegen.

In einer weiteren bevorzugten Variante enthält die Kapsel als Indikatormittel keinen Farbstoff, sondern wenigstens ein Edukt zur Herstellung eines Farbstoffs. Können beispielsweise ein Edukt E1 und ein Edukt E2 zu einem Farbstoff F12 reagieren, so kann das Edukt E1 verkapselt in dem dem elektronischen Element benachbarten Bereich, insbesondere in dem Material der Crack-Prävention, vorliegen und in direkter Nähe des verkapselten Edukts 1 das Edukt E2. Wird nun das elektronische Element einem hohen Druck oder einer hohen Temperatur ausgesetzt, so birst die Kapsel mit dem Edukt E1, das freigesetzt wird und mit dem Edukt E2 zu dem Farbstoff F12 reagiert, der sichtbar ist und die Manipulation anzeigt.

Die Bildung des Farbstoffs F12 aus den Edukten E1 und E2 sollte irreversibel sein, um den Manipulationsversuch anzuzeigen.

Bei dem Farbstoff F12 kann es sich beispielsweise um einen Triphenylmethanfarbstoff wie beispielsweise Kristallviolett, einen Küpenfarbstoff oder einen Entwicklungsfarbstoff handeln.

Das farblose Kristallviolettlakton, die Leukoverbindung eines Triphenylmethanfarbstoffs, bildet im Sauren das stark farbige Kristallviolett. Nachdem die Farbreaktion vom pH-Wert abhängig ist, ist Kristallviolett auch als pH-Indikator bekannt. Ist das (farblose) Kristallviolettlakton gelöst in einem geeigneten Lösemittel eingekapselt und sind die Kapseln zusammen mit einer verdünnten Säure in den Bereich um das elektronische Element, insbesondere dem Bereich der Crack-Prävention, in das weiche Kunststoffmaterial eingebracht, so wird beim Zerbersten der Kapsel das Kristallviolettlakton freigesetzt, das dann mit den umgebenden Protonen zu dem stark farbigen Kristallviolett reagiert.

Mikrokapseln mit Kristallviolettlakton werden beispielsweise bei Durchschreibepapieren ohne Kohleschicht eingesetzt und sind im Stand der Technik bekannt.

Küpenfarbstoffe sind Farbstoffe mit indigoider oder anthrachinoider Struktur, die für die Färberei zunächst mit Reduktionsmitteln zu Leukofarbstoffen reduziert und in ihre lösliche Form gebracht (verküpt) werden. So kann der Küpenfarbstoff auf die Faser aufziehen. Er wird dann durch anschließende Oxidation wieder in den unlöslichen Zustand überführt und damit fixiert, somit quasi an der Faser ausgefällt.

In einer bevorzugten Variante wird ein Leukofarbstoff (Edukt 1) in den Bereich um das elektronische Element eingebracht und in direkter Nähe des Leukofarbstoffs E1 werden Kapseln mit dem Oxidationsmittel (Edukt 2), vorzugsweise in Lösung, eingebracht. Bei der Einwirkung hoher Temperaturen oder Drücke zerplatzt die Kapsel, das Oxidationsmittel wird freigesetzt, das den Leukofarbstoff zu dem gewünschten Küpenfarbstoff wie beispielswiese Indigo oder Indanthrenblau oxidiert.

Selbstverständlich kann auch der Leukofarbstoff verkapselt und das Oxidationsmittel nicht gekapselt oder ebenfalls gekapselt vorliegen.

In einer weiteren bevorzugten Variante wird ein Edukt zur Herstellung von Entwicklungsfarbstoffen, insbesondere eine sogenannte Grundierung, eine wasserunlösliche Kupplungskomponente (wie z.B. Naphthol AS oder 2-Hydroxy-3-naphtholsäureanilid), in den Bereich nahe dem elektronischen Element eingebracht, und in direkter Nähe dazu befinden sich Diazoniumsalze, vorzugsweise gelöst in Wasser, wobei wenigstens eines der beiden Elemente gekapselt vorliegen sollte. Auch hier zerplatzt die Kapsel durch die Erhöhung des Drucks oder der Temperatur und setzt das Diazoniumsalz und/oder die Kupplungskomponente frei, das dann mit dem Naphtholderivat zu dem gewünschten Farbstoff reagiert.

Selbstverständlich können auch andere Edukte zur Herstellung anderer Farbstoffe dienen, beide verkapselt oder teils verkapselt, teils direkt in den Bereich nahe des elektronischen Elements zur Anzeige von Manipulationsversuchen durch die Einwirkung von großen Impulsen/Drücken und/oder hohen Temperaturen eingesetzt werden.

Die in den Bereich, insbesondere den Crack-Präventionsbereich, um das elektronische Element in der Kapsel eingebrachte Menge an Indikatormittel muss so groß sein, dass nach dem Aufplatzen der Kapsel (und gegebenenfalls einer sich anschließenden chemischen Reaktion) ein gut sichtbarer Farbfleck erzeugt wird.

Vorzugsweise befinden sind die Kapseln mit dem Indikatormittel in dem Bereich um das elektronische Element und insbesondere in dem den Crack-Präventionsbereich bildenden weicheren Kunststoffmaterial.

Dadurch, dass erfindungsgemäß die Kapseln mit dem Indikatormittel in dem Bereich um das elektronische Element vorgesehen sind, kann ein gezielter Manipulationsversuch auf einfache Weise ermittelt werden.

Die Kapseln können Polymeren wie Melamin-Formaldehyd-Polymeren, Polyurethanen, Polyamiden, Polyharnstoff oder Polyester, vinylische Polymere, insbesondere Polyacrylate und Polymethacrylate oder Polysiloxane umfassen. Die in der Kapsel vorhandene Flüssigkeit des Indikatormittels sollte das Kapselmaterial nicht auflösen. Insbesondere sollte das Kapselmaterial wasserunlöslich sein.

Die Kapseln mit den Indikatormitteln zerplatzen weder durch Strahlung von Flughafenröntgengeräten, noch durch die von Körperscannern.

Nachdem die Kapseln mit dem Indikatormittel erfindungsgemäß in dem das elektronische Element umgebenden Material, insbesondere dem Material der Crack-Prävention, eingebettet sind, dieses thermoplastisch und weicher als das Kunststoffmaterial der Kunststoffschichten ist und die Lamination unter Erwärmung und Druck, nicht jedoch unter einem plötzlichen jähen Impuls erfolgt, werden die Kapseln im Allgemeinen beim Laminieren nicht zerstört.

Das elektronische Element muss nicht von allen Seiten von der Crackprävention umgeben sein. Im Allgemeinen ist es ausreichend, wenn das elektronische Element seitlich und auf der Ober- oder Unterseite von der Crack-Prävention umgeben ist.

Unter einem großen Impuls wird im Rahmen der Erfindung ein Impuls verstanden, der so hoch ist, dass die Kapseln in der umgebenden Matrix zerbersten.

Im Rahmen der Erfindung wird unter einem elektronischen Element zur Speicherung von Daten beispielsweise ein Chip, ein kontaktloser integrierter Schaltkreis mit Datenspeicherung, ein Transpondermodul mit einem IC-Chip, Kontakten und einer Antenne oder ein gedruckter Schaltkreis verstanden. Die elektronischen Elemente können auch zum Schutz in Epoxidharz eingebettet und auf einem Metallrahmen, auf dem die Antenne aufgebracht wird, angeordnet sein. Die elektronischen Elemente können mit der logischen Datenspeicherungsstruktur gemäß ICAO Doc. 9303 codiert sein. Diese elektronischen Elemente sind für die Speicherung von Daten vorgesehen und liefern im Unterschied zu den Schwingkreisen bei Anregung keinen Wärmeeintrag.

Sicherheitsdokumente existieren u.a. in Form einer Datenträgerkarte, die durch Lamination von Kunststoffschichten, beispielsweise aus Polycarbonat oder Bisphenol-A-Polycarbonat, Carboxy-modifiziertem PC, aus Kunststoffschichten aus Polyestern wie Polyethylenterephthalat (PET), dessen Derivaten wie glykolmodifiziertem PET (PETG), Carboxy-modifiziertem PET, Polyethylennaphthalat (PEN), aus Kunststoffschichten aus vinylischen Polymeren wie Polyvinylchlorid (PVC), Polyvinylbutyral (PVB), Polymethylmethacrylat (PMMA), Polyvinylalkohol (PVA), Polystyrol (PS), Polvinylphenol (PVP), Polypropylen (PP), Polyethylen (PE), Polyacrylnitrilbutadienstyrol, aus Kunststoffschichten aus der Gruppe der Polyamide, oder aus der Gruppe der Polyurethane, Polyharnstoffe, Polyimide, thermoplastischen Elastomeren (TPE), insbesondere thermoplastischem Polyurethan (TPU), und/oder deren Derivate hergestellt werden.

Zwischen diese Schichten wird das elektronische Element einlaminiert.

Der Crack-Präventionsbereich wird dadurch hergestellt, dass in der Schicht, in der das elektronische Element eingebracht wird, ein Bereich ausgespart wird, um das elektronische Element und das das elektronische Element umgebende weichere Kunststoffmaterial der Crack-Prävention aufzunehmen.

Um die Gefahr, dass die in dem Bereich um das elektronische Element oder den Crack-Präventionsbereich eingebrachten Kapseln während des Laminierens zerstört werden, weiter zu vermindern, werden bevorzugt Kapselmaterialien eingesetzt, die zunächst noch eine gewisse Elastizität aufweisen, so dass sie beim Laminationsprozess nicht zerbersten und erst später vollständig aushärten und somit unter Druck bersten.

Sicherheitsdokumente in Form von buchartigen Dokumenten wie z.B. Reisepässe umfassen neben dem laminierten Datenträger einen Bucheinband und einen Buchblock, der den Datenträger umfasst. Bei einem solchen buchartigen Sicherheitsdokument sind die Kapseln in dem Bereich um das elektronische Element vorgesehen.

Durch die auf dem Sicherheits- oder Wertdokument infolge des Manipulationsversuchs auftretende Farbänderung werden die die Sicherheits- oder Wertdokumente prüfenden Personen veranlasst, das Dokument einer eingehenderen Überprüfung zu unterziehen. Dazu könnte das Dokument z. B. im Durchlicht betrachtet werden oder die Oberfläche der Crack-Prävention abgetastet werden.

Zudem können bei einem Manipulationsversuch die erfindungsgemäß erzeugten Farbänderungen auch spektroskopisch oder mit einem anderen Messgerät wie einem Oberflächensensor oder einer Kamera im Durchlicht detektiert werden, um die kontrollierende Person auf einen Manipulationsversuch hinzuweisen.

Die Erfindung wird im Folgenden anhand eines buchartigen Sicherheits- oder Wertdokuments näher beschrieben. Es zeigen:

Figur 1 eine perspektivische Ansicht eines erfindungsgemäßen buchartigen Sicherheits- oder Wertdokumentes,

Figur 2 eine schematische Darstellung eines Teils des Schichtaufbaus bei der Herstellung des Crack-Präventionsbereichs um das elektronische Element,

Figur 3 einen Schnitt durch den Datenträger im Bereich des elektronischen Elements mit Crack-Präventionsbereich und

Figur 4 die Vergrößerung des Bereichs A aus Figur 3.

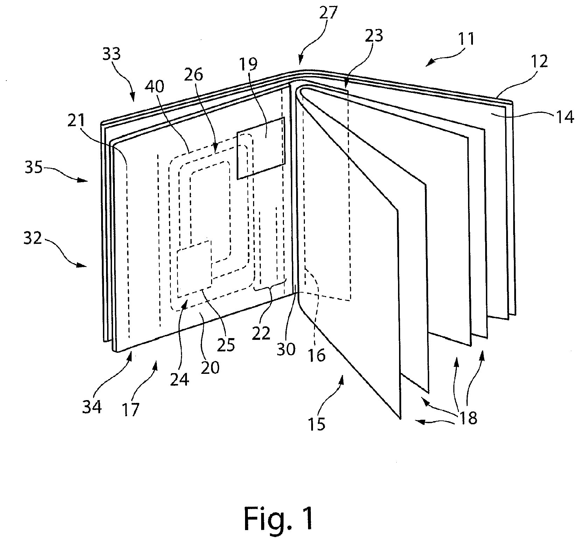

In Figur 1 ist ein buchartiges Dokument 11, insbesondere buchartiges Sicherheits- oder Wertdokument, perspektivisch dargestellt. Bei diesem buchartigen Dokument 11 handelt es sich beispielsweise um ein Identifikationsdokument wie einen Reisepass. Das Dokument 11 umfasst beispielsweise einen Bucheinband 12. Auf einer Innenseite 18 des Bucheinbandes 12 kann ein Vorsatz 14 vorgesehen sein, der am Bucheinband 12 befestigt ist. Über eine Naht 16 sind eine Datenseite 17 und eine oder mehrere Innenseiten 18 miteinander zu einem Buchblock 15 verbunden. Insbesondere ist der Vorsatz 14 auch mit der Naht 16 zum Buchblock 15 verbunden. Die Innenseiten 18 des buchartigen Dokuments 11 dienen zur Aufnahme von Visa, Stempeln oder sonstigen Eintragungen. Die Datenseite 17 besteht aus einem Datenträger 20 und einer daran befestigten Lasche 23. Die Datenseite 17, insbesondere der Datenträger 20, kann beispielsweise gemäß dem ICAO-Standard ausgebildet sein und ein Bild 19 des Dokumenteninhabers, einen maschinenlesbaren Bereich 21 (MRZ) sowie weitere Personalisierdaten 22 umfassen. Die Personalisierdaten 22 sind innerhalb des Datenträgers 20 vorgesehen. Die Lasche 23 des Datenträgers 20 erstreckt sich über die Naht 16 hinweg. Diese Lasche 23 umfasst auch einen Nahtbereich, in dem die Naht 16 gebildet ist. Zusätzlich oder alternativ kann zur Naht 16 noch eine Klebe- und/oder Schweißverbindung vorgesehen sein, um die Lasche 23 in das buchartige Dokument 11, insbesondere den Buchblock 15, einzubinden.

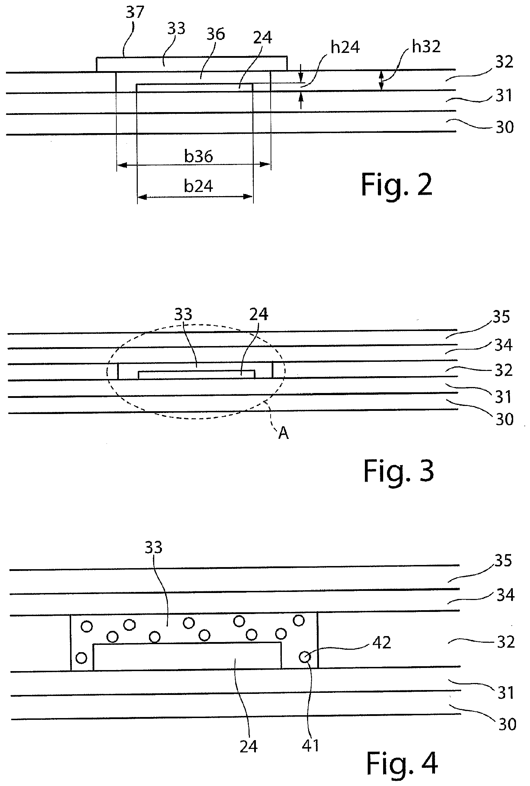

Der Datenträger 20 umfasst ein Transpondermodul 24 als elektronisches (Speicher)element, welches aus einem IC-Chip 25 sowie einer Antenne 26 besteht. Der Datenträger 20 besteht bevorzugt aus einem Laminat und weist mehrere Schichten 30, 31, 32, 34 und 35 auf, vgl. Figur 2. Bei den Schichten 30, 31, 32, 34, 35 zur Herstellung des Datenträgers 20 kann es sich um thermoplastische Elastomere, insbesondere Polycarbonatschichten, handeln.

In der Schicht 32, die auf der Schicht 31 aufliegt, ist ein Bereich 36 ausgespart. Die Breite b₃₆ des Bereichs 36 ist größer als die Breite b₂₄ des elektronischen Elements 24. Das elektronische Element 24 ist in den ausgesparten Bereich 36 eingelegt und liegt auf der Schicht 31 auf.

Vorzugsweise ist die Höhe h₃₂ der Schicht 32 größer als die Höhe h₂₄ des elektronischen Elements 24, so dass ein Bereich 36 oberhalb des elektronischen Elements 24 ebenfalls ausgespart ist.

Bei der Herstellung des Datenträgers 20 wird nun oberhalb des elektronischen Elements 24 ein flächiges Materialstück (Patch) 37 aus einem thermoplastischen relativ weichen Kunststoffmaterial 33 wie beispielsweise TPU aufgebracht. Das thermoplastische weiche Kunststoffmaterial 33 fließt bei Erwärmung in den ausgesparten Bereich 36 um das elektronische Element 24. Das elektronische Element 24 ist somit seitlich und vorzugsweise auch an seiner Oberseite und ggfs. auch zum Teil an seiner Unterseite von dem weichen thermoplastischen Material 33 umgeben und somit gegen unbeabsichtigte leichtere Stöße geschützt. Dieses weiche thermoplastische Material 33, das das elektronische Element 24 wenigstens teilweise umgibt, wird als "Crash-Prävention(sbereich)" 40 bezeichnet, vgl. Figur 2 und 3.

Die Schichten 30, 31 und die Schicht 32 mit dem von dem Crack-Präventionsbereich 40 umgebenen elektronischen Element 24 werden dann mit den Schichten 34, 35 durch Lamination verbunden. Das thermoplastische Kunststoffmaterial 33 des ursprünglich flächigen Materialstücks (Patch) 37 enthält eine Vielzahl von Kapseln 41, in denen das Indikatormittel 42 enthalten ist, vgl. Figur 4.

Ist das Indikatormittel 42 ein Edukt E1, so können in das thermoplastische Kunststoffmaterial 33 auch noch weitere für die Bildung des Farbstoffs F12 erforderliche Edukte E2 eingebracht sein.

Der Crack-Präventionsbereich 40 erstreckt sich um das aus IC-Chip 25 mit Kontakt und Antenne 26 bestehende Transpondermodul 24. Der Crack-Präventionsbereich 40 dient einerseits dazu, eine unbeabsichtigte Zerstörung insbesondere der Antenne 26 und der Kontakte bei einem unbeabsichtigten Biegen oder einem unbeabsichtigten leichteren Stoß zu verhindern, indem das den Crack-Präventionsbereich 40 bildende Material 33 weicher als das umgebende Kunststoffmaterial ist. Der Crack-Präventionsbereich 40 dient andererseits auch dazu, die Kapseln 41 mit dem Indikatormittel 42 und ggf. weiteren Reaktionspartnern aufzunehmen.

**Bezugszeichenliste**

| | |
|---|---|
| 11. buchartiges Dokument | 33. weiches Kunststoffmaterial, thermoplastisches Material |
| 12. Bucheinband | 34. Schicht |
| 13. | 35. Schicht |
| 14. Vorsatz | 36. ausgesparter Bereich in 32 |
| 15. Buchblock | 37. flächiges Materialstück (Patch) |
| 16. Naht | 38. |
| 17. Datenseite | 39. |
| 18. Innenseiten | 40. Crack-Präventionsbereich |
| 19. Bild des Dokumenteninhabers | 41. Kapseln |
| 20. Datenträger | 42. Indikatormittel |
| 21. maschinenlesbarer Bereich | 43. |
| 22. Personalisierdaten | 44. |
| 23. Lasche | 45. |
| 24. Transpondermodul, elektronisches (Speicher)Element | 46. |
| 25. IC-Chip | 47. |
| 26. Antenne | 48. |
| 27. | 49. |
| 28. | 50. |
| 29. | 51. |
| 30. Schicht | 52. |
| 31. Schicht | 53. |
| 32. Schicht mit Crack-Prävention | 54. |

## Patentansprüche

1. Sicherheits- oder Wertdokument (11, 20) , das ein elektronisches Element (24) zur Datenspeicherung aufweist, **dadurch gekennzeichnet, dass** zur Anzeige von Manipulationsversuchen durch große Impulse an dem elektronischen Element (24) in dem an das elektronische Element (24) angrenzenden Bereich (36, 40) Indikatormittel (42) in Kapseln (41) vorgesehen sind, die Kapseln (41) durch Einwirkung eines großen Impulses zerstörbar sind und das Indikatormittel (42) eine Flüssigkeit umfasst.

2. Sicherheits- oder Wertdokument (11, 20) nach Anspruch 1, **dadurch gekennzeichnet, dass** der an das elektronische Element (24) angrenzende Bereich (36, 40) der Bereich der Crack-Prävention (40) ist.

3. Sicherheits- oder Wertdokument (11, 20) nach Anspruch 1 oder 2, **dadurch gekennzeichnet, dass** das Indikatormittel (42) wenigstens einen Farbstoff F oder wenigstens ein Edukt E1, E2 zur Herstellung von Farbstoffen F12 umfasst.

4. Sicherheits- oder Wertdokument (11, 20) nach Anspruch 3, **dadurch gekennzeichnet, dass** der Farbstoff (F, F12) ein thermochromer Farbstoff oder ein Küpen-, ein Triphenylmethan- oder ein Entwicklungsfarbstoff oder ein anderer Farbstoff, der sich aus wenigstens zwei Edukten herstellen lässt, ist.

5. Sicherheits- oder Wertdokument (11, 20) nach einem der Ansprüche 2 bis 4, **dadurch gekennzeichnet, dass** der Bereich der Crack-Prävention (40) ein Kunststoffmaterial (33) umfasst, das ein weicher thermoplastischer Kunststoff, TPU, ein klebendes Polymer oder ein Polyacrylat ist.

6. Sicherheits- oder Wertdokument (11, 20) nach einem der vorangegangenen Ansprüche, **dadurch gekennzeichnet, dass** die Kapsel (41) aus einem wasserunlöslichen Material und/oder einem Material, das in der in dem Indikatormittel (42) enthaltenen Flüssigkeit nicht löslich ist, besteht.

7. Sicherheits- oder Wertdokument (11, 20) nach einem der vorangegangenen Ansprüche, **dadurch gekennzeichnet, dass** das Material der Kapsel (41) Polymeren wie Melamin-Formaldehyd-Polymeren, Polyurethanen, Polyamiden, Polyharnstoff oder Polyester, vinylische Polymere, insbesondere Polyacrylate und Polymethacrylate oder Polysiloxane umfasst.

8. Sicherheits- oder Wertdokument (11, 20) nach einem der vorangegangenen Ansprüche, **dadurch gekennzeichnet, dass** das elektronische Element (24) zur Datenspeicherung ein Chip, ein kontaktloser integrierter Schaltkreis mit Datenspeicherung, ein Transpondermodul mit einem IC-Chip und einer Antenne oder ein gedruckter Schaltkreis ist.

9. Sicherheits- oder Wertdokument (11, 20) nach einem der vorangegangenen Ansprüche, **dadurch gekennzeichnet, dass** das Sicherheits- oder Wertdokument (11, 20) einen Datenträger (20) umfasst, der durch Lamination von Kunststoffschichten (30, 31, 32, 34, 35) hergestellt ist und in der Kunststoffschicht (32) ein Bereich (36) für das elektronische Element (24) und ein thermoplastisches weiches Kunststoffmaterial (33), insbesondere als Crack-Prävention (40), ausgespart ist, wobei das Kunststoffmaterial (33) Kapseln (41) mit dem Indikatormittel (42) aufweist.

10. Sicherheits- oder Wertdokument (11, 20) nach Anspruch 9, **dadurch gekennzeichnet, dass** die Kunststoffschichten aus Polycarbonat oder Bisphenol-A-Polycarbonat, Carboxy-modifiziertem PC, Polyester, Polyethylenterephthalat (PET), dessen Derivaten, glykolmodifiziertem PET (PETG), Carboxy-modifiziertem PET, Polyethylennaphthalat (PEN), vinylischen Polymeren, Polyvinylchlorid (PVC), Polyvinylbutyral (PVB), Polymethylmethacrylat (PMMA), Polyvinylalkohol (PVA), Polystyrol (PS), Polvinylphenol (PVP), Polypropylen (PP), Polyethylen (PE), Polyacrylnitrilbutadienstyrol, Polyamid, Polyurethane, Polyharnstoffe, Polyimide, thermoplastischen Elastomeren (TPE), thermoplastischem Polyurethan (TPU) und/oder deren Derivaten sind.

11. Verwendung des Sicherheits- oder Wertdokuments (11, 20) nach einem der vorangegangenen Ansprüche zur Erkennung von Manipulationen an dem elektronischen Element (24) des Sicherheits- oder Wertdokuments (11, 20) infolge von großen Impulsen.
